# EUROPEAN PATENT APPLICATION

(11) **EP 4 749 795 A1**
(43) Date of publication of application: **27.05.2026**
(21) Application number: 25212544.8
(22) Date of filing: 31.10.2025
(51) Int. Cl.: H01M 50/342, F16K 17/16, H01M 50/15

(54) **PRESSURE RELIEF STRUCTURE AND ITS MANUFACTURING PROCESS**

(30) Priority: 22.11.2024 CN 202411678421; 25.07.2025 CN 202511031012
(71) Applicant: Ri Shan Computer Accessory (Jiashan) Co., Ltd., Jiaxing, Zhejiang (CN)
(72) Inventor: Zhang, Hong, Jiaxing City, Zhejiang (CN); Sun, Lei, Jiaxing City, Zhejiang (CN); Wang, Longfei, Jiaxing City, Zhejiang (CN)
(74) Representative: Herrero & Asociados, S.L.

(57) **Abstract**

The invention relates to the field of explosion-proof pressure relief technology, and more particularly to a pressure relief structure and its manufacturing process, and an explosion-proof method. The pressure relief structure includes a container body, at least including: a shell and a cover. At least one weak area forming embedding strip is embedded in the cover and/or at least one part of the shell to thereby allow the cover and/or the at least one part of the shell to have a pressure relief weak area. A thickness of the cover is greater than an embedding depth of the weak area forming embedding strip in the cover, and/or a thickness of the at least one part of the shell is greater than an embedding depth of the weak area forming embedding strip in the at least one part of the shell. The pressure relief weak area and the weak area forming embedding strip are configured to open along a length direction of the weak area forming embedding strip when in a pressure relief state. The present invention forms a pressure relief weak area by embedding a weak area-forming embedding strip into the container body, enabling it to rupture or deform preferentially during pressure relief, thereby releasing internal pressure and protecting the container body from damage.

## Description

### TECHNICAL FIELD

The invention relates to the field of explosion-proof pressure relief technology, and more particularly to a pressure relief structure and its manufacturing process, and an explosion-proof method.

### BACKGROUND

Explosion-proof terminals, such as a new energy battery, for example, require that the battery structural component in the new energy power battery or an energy storage station must open for explosion-proof purposes when the gas pressure inside the battery shell reaches 0.7 megapascals (MPa) to 2.3 MPa. This is because the aluminum or steel material in the new energy battery may explode before a short circuit occurs, or the electrolyte and other materials may decompose and produce gas after prolonged charging, leading to an explosion.

Currently, an explosion-proof structure such as an explosion-proof valve and a scribe mark are set on the battery top cover/upper cover and shell surface. The explosion-proof valve is assembled through a welding process, which is costly and inefficient overall. On the other hand, the method of using the scribe mark for explosion-proof purposes has defects such as poor stability and inconsistent depth.

After the scribe mark is formed, a weak area is created on the surface, and the weak area is used for pressure relief when the internal pressure increases. However, during assembly, transportation, and installation, factors such as external forces and vibrations can cause the weak area to crack, affecting its service life.

### SUMMARY

In view of the foregoing, the invention provides a pressure relief structure and its manufacturing process, and an explosion-proof method, aiming to solve the problems in the related art.

In a first aspect, the pressure relief structure provided by the invention includes a container body. The container body at least includes a shell and a cover. At least one weak area forming embedding strip is embedded in at least one of the cover and at least one part of the shell to thereby allow the at least one of the cover and the at least one part of the shell to have a pressure relief weak area; a thickness of the cover is greater than an embedding depth of the at least one weak area forming embedding strip embedded in the cover, and/or a thickness of the at least one part of the shell is greater than an embedding depth of the at least one weak area forming embedding strip embedded in the at least one part of the shell; and the pressure relief weak area and the at least one weak area forming embedding strip are configured to open along a length direction of the at least one weak area forming embedding strip when in a pressure relief state.

In some embodiments of the invention, the at least one weak area forming embedding strip is embedded in an inner surface or an outer surface of the at least one part of the shell.

In some embodiments of the invention, the at least one weak area forming embedding strip is embedded in any surface of the cover in a thickness direction of the cover.

In some embodiments of the invention, the at least one weak area forming embedding strip is a strip-shaped metal embedding strip, the at least one weak area forming embedding strip is embedded in the at least one part of the shell, and the at least one weak area forming embedding strip is embedded in the cover.

In some embodiments of the invention, the at least one weak area forming embedding strip is at least one of a straight embedding strip and a curved embedding strip.

In some embodiments of the invention, the at least one weak area forming embedding strip is one of an equal-thickness weak area forming embedding strip, a locally reduced-thickness weak area forming embedding strip, and a serrated weak area forming embedding strip to thereby make the pressure relief weak area be one of an equal-thickness pressure relief portion, a locally increased-thickness pressure relief portion, and a dot-break pressure relief portion.

In some embodiments of the invention, at least one end part and a middle part of a surface of the at least one weak area forming embedding strip close to the pressure relief weak area each has a residual thickness reduction portion. The residual thickness reduction portion of the middle part is connected to the residual thickness reduction portion of the at least one end part through a gradient change surface to make the pressure relief weak area be the locally increased-thickness pressure relief portion in a gradient change type; or the residual thickness reduction portion of the middle part extends towards the residual thickness reduction portion of the at least one end part and is connected to the residual thickness reduction portion of the at least one end part through an increased-thickness notch to make the pressure relief weak area be the locally increased-thickness pressure relief portion.

In some embodiments of the invention, a surface of the at least one weak area forming embedding strip close to the pressure relief weak area has multiple serrated portions penetrating through a thickness direction of the pressure relief weak area to make the pressure relief weak area be the dot-break pressure relief portion.

In some embodiments of the invention, the at least one of the cover and the at least one part of the shell defines an embedding groove formed by embedding the at least one weak area forming embedding strip, an end of a cross-section of the at least one weak area forming embedding strip close to a bottom of the embedding groove is one or more of an inclined surface, a flat surface, a concave circular arc surface, and a convex circular arc surface.

Compared to the related art, the pressure relief structure of the invention has the following beneficial effects.

The container body in the invention consists of a shell and a cover, which are configured to accommodate and protect the internal structure. The weak area forming embedding strip is embedded into the shell or the cover to thereby form the pressure relief weak area that can rupture or deform preferentially during pressure relief, thereby releasing the internal pressure and protecting the container body from damage. The embedding depth of the weak area forming embedding strip is less than the thickness of the cover or the shell, ensuring that even after embedding the weak area forming embedding strip, the shell and the cover still maintain sufficient strength to prevent accidental rupture under normal conditions. The pressure relief weak area is a specific region formed under the influence of the weak area forming embedding strip, which opens along the length direction of the weak area forming embedding strip when the internal pressure of the container exceeds a certain limit, thereby quickly releasing the internal pressure.

In a second aspect, the manufacturing process of the pressure relief structure provided by the invention includes the following steps:
S1, setting that the thickness of the at least one part of the shell is greater than the embedding depth of the at least one weak area forming embedding strip in the at least one part of the shell, and/or setting that the thickness of the cover is greater than the embedding depth of the at least one weak area forming embedding strip in the cover;
S2, embedding the at least one weak area forming embedding strip into the at least one of the cover and the at least one part of the shell by pressing to form the pressure relief weak area in the at least one of the cover and the at least one part of the shell; and
S3, connecting and sealing the shell and the cover in step S2 to form the container body, wherein the pressure relief weak area and the at least one weak area forming embedding strip open along the length direction of the at least one weak area forming embedding strip when the container body is in the pressure relief state.

In some embodiments of the invention, step S2 includes the following steps:
S20, placing a weak area forming embedding strip-forming assembly on a weak area forming embedding strip loading station, and feeding a weak area forming embedding strip to be formed into the weak area forming embedding strip-forming assembly to obtain the at least one weak area forming embedding strip in a set shape;
S21, moving the weak area forming embedding strip-forming assembly in step S20 to a shell loading station; and fitting the shell on the weak area forming embedding strip-forming assembly, or fixing the cover on the weak area forming embedding strip-forming assembly;
S22, moving the weak area forming embedding strip-forming assembly in step S21 to a pressing station, and moving a pressing upper die disposed on the pressing station downward to contact the shell or the cover to thereby force the at least one weak area forming embedding strip to be embedded into the cover or the at least one part of the shell; and
S23, moving the weak area forming embedding strip-forming assembly in step S22 to an unloading station, and removing the shell or the cover.

Compared to the related art, the manufacturing process of the pressure relief structure has the following beneficial effects.

In the invention, the thickness of the shell and the thickness of the cover are greater than the embedding depth of the weak area forming embedding strip, ensuring that after the weak area forming embedding strip is embedded, the weak area forming embedding strip does not protrude from either surface of the wall thickness where it is embedded, thus avoiding potential differences. Moreover, the weak area forming embedding strip is fixed within the shell or the cover through a pressing process, which helps to precisely control the embedding depth and position, ensuring that the embedding strip is correctly embedded without damaging the shell or cover. Meanwhile, after the weak area forming embedding strip is embedded, the pressure relief weak area is formed on the at least one part of the shell and/or the cover. During pressure relief, the pressure relief weak area and the weak area forming embedding strip open along the length direction of the weak area forming embedding strip. The pressing process precisely controls the embedding depth to prevent it from being too deep or too shallow, which could result in the pressure relief weak area failing to open at the appropriate pressure or causing insufficient strength of the shell or the cover, leading to accidental rupture under normal conditions. The invention achieves the safe pressure relief function when the internal pressure of the container body is too high, thereby enhancing the safety and reliability of the container.

In a third aspect, the explosion-proof method based on the pressure relief structure provided by the invention includes the following steps:
setting a safe gas pressure value and a burst gas pressure value inside the container body; and
opening the pressure relief weak area and the at least one weak area forming embedding strip along the length direction of the at least one weak area forming embedding strip when a gas pressure inside the container body reaches the burst gas pressure value to thereby perform a pressure relief action.

It can be understood that in this embodiment, when the internal gas pressure of the container body reaches or exceeds the burst pressure value, the pressure relief weak area and the weak area forming embedding strip on the container body open along the length direction of the weak area forming embedding strip, releasing the internal pressure to avoid safety risks. The safe pressure value is less than the burst pressure value.

### BRIEF DESCRIPTION OF DRAWINGS

By reading the detailed description of the exemplary embodiments in the following text, various other advantages and benefits will become clear to those skilled in the art. The accompanying drawings are only for the purpose of illustrating exemplary embodiments and are not to be considered limiting of the invention. And throughout the entire figures, the same reference symbols are used to represent the same components. In the accompanying drawings:
FIG. 1 illustrates a schematic structural diagram of a container body according to an embodiment of the invention.
FIG. 2 illustrates a first schematic structural diagram of a pressure relief structure according to the embodiment of the invention.
FIG. 3 illustrates a schematic cross-sectional diagram of the pressure relief structure according to the embodiment of the invention.
FIG. 4 illustrates a first cross-sectional diagram of a pressure relief weak area according to the embodiment of the invention.
FIG. 5 illustrates a second cross-sectional diagram of the pressure relief weak area according to the embodiment of the invention.
FIG. 6 illustrates a first schematic structural diagram of a weak area forming embedding strip according to the embodiment of the invention.
FIG. 7 illustrates a second schematic structural diagram of the weak area forming embedding strip according to the embodiment of the invention.
FIG. 8 illustrates a third schematic structural diagram of the weak area forming embedding strip according to the embodiment of the invention.
FIG. 9 illustrates a schematic structural diagram of a pressure relief through area and the pressure relief weak area according to the embodiment of the invention.
FIG. 10 illustrates a schematic structural diagram of a cover provided with the pressure relief weak area according to the embodiment of the invention.
FIG. 11 illustrates a cross-sectional structural diagram of the weak area forming embedding strip according to the embodiment of the invention.
FIG. 12 illustrates a schematic structural diagram of a weak area forming embedding strip-forming assembly according to the embodiment of the invention.
FIG. 13 illustrates a schematic structural diagram of a blade group fixing position and a first support position according to the embodiment of the invention.
FIG. 14 illustrates a schematic structural diagram of an embedding strip forming device according to the embodiment of the invention.
FIG. 15 illustrates a third cross-sectional diagram of the pressure relief weak area according to the embodiment of the invention.
FIG. 16 illustrates a fourth cross-sectional diagram of the pressure relief weak area according to the embodiment of the invention.
FIG. 17 illustrates a second schematic structural diagram of the pressure relief structure according to the embodiment of the invention.
FIG. 18 illustrates a schematic structural diagram of a shell and the cover according to the embodiment of the invention.

Description of reference signs: 1: container body; 11: shell; 12: cover; 13: recess; 14: weak portion; 15: pressure relief weak area; 151: residual thickness pressure relief portion; 2: reinforcement member; 21: pressure relief through area; 3: weak area forming embedding strip; 31: embedding groove; 32: residual thickness reduction part; 33: gradient change surface; 34: increased-thickness notch; 35: serrated portion; 36: weak area forming embedding strip to be formed; 4: weak area forming embedding strip-forming assembly; 41: forming mold; 42: embedding strip bending forming groove; 43: embedding strip feeding guide; 44: embedding strip cutting mechanism; 441: shearing blade group; 442: driver; 45: first support position; 46: blade group fixing position; 5: rotary table; 51: weak area forming embedding strip loading station; 52: shell loading station; 53: pressing station; 54: unloading station; 55: pressing upper die.

### DETAILED DESCRIPTION OF EMBODIMENTS

The exemplary embodiments of the invention will be described in more detail below with reference to the accompanying drawings. Although the exemplary embodiments of the invention are shown in the accompanying drawings, it should be understood that the invention may be implemented in various forms and should not be limited by the embodiments described herein. On the contrary, these embodiments are provided to enable a more thorough understanding of the present invention and to fully convey the scope of the present invention to those skilled in the art. It should be noted that the embodiments and features in the embodiments of the present invention can be combined with each other without conflict. The present invention will be described in detail below with reference to the accompanying drawings and in conjunction with the embodiments.

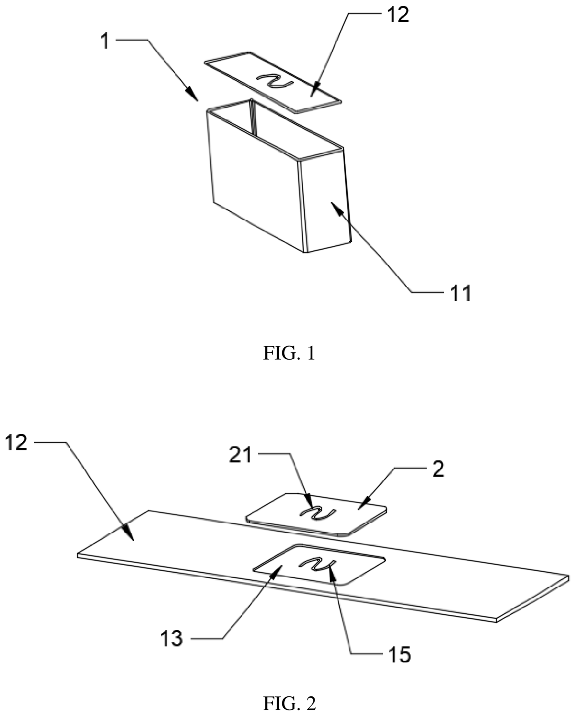

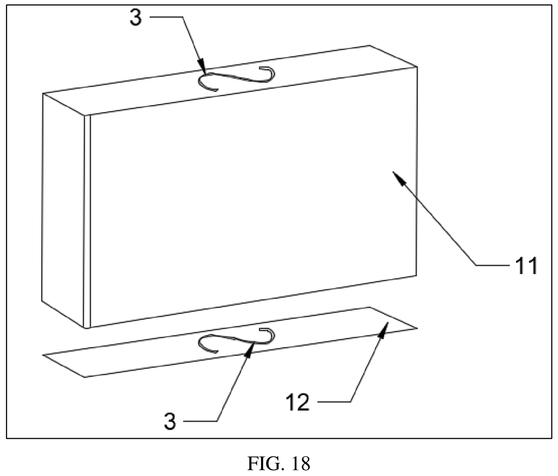

Embodiment 1. Referring to FIGS. 1, and 17-18, the embodiment 1 provides a pressure relief structure. The pressure relief structure includes a container body 1. The container body 1 is constructed in a square or circular shape. The container body 1 at least includes a shell 11 and a cover 12. At least one weak area forming embedding strip 3 is embedded in at least one of the cover 12 and at least one part of the shell 11 to thereby allow the at least one of the cover 12 and the at least one part of the shell 11 to have a pressure relief weak area 15. A thickness of the cover 12 is greater than an embedding depth of the at least one weak area forming embedding strip 3 embedded in the cover 12, and/or a thickness of the at least one part of the shell 11 is greater than an embedding depth of the at least one weak area forming embedding strip 3 embedded in the at least one part of the shell 11. The pressure relief weak area 15 and the at least one weak area forming embedding strip 3 are configured to open along a length direction of the at least one weak area forming embedding strip 3 when in a pressure relief state.

Specifically, the shell 11 is formed by stretching a metal sheet, and the shell 11 includes a sidewall part and a bottom part.

In an embodiment, the weak area forming embedding strip 3 is embedded in an inner surface or an outer surface of the at least one part of the shell 11.

In an embodiment, the weak area forming embedding strip 3 is embedded in any surface of the cover 12 in a thickness direction of the cover 12.

In an embodiment, the weak area forming embedding strip 3 is a strip-shaped metal embedding strip, the at least one weak area forming embedding strip 3 is embedded in the at least one part of the shell 11, and the at least one weak area forming embedding strip 3 is embedded in the cover 12.

Specifically, the embedding position of the weak area forming embedding strip 3 includes the following setting schemes.

Scheme 1: at least one inner surface and/or outer surface of the sidewall part of the shell 11 is provided with the at least one weak area forming embedding strip 3.

Scheme 2: at least one of an inner surface and an outer surface of the bottom part of the shell 11 is provided with the at least one weak area forming embedding strip 3.

Scheme 3: any surface of the cover 12 in the thickness direction of the cover 12 is provided with the at least one weak area forming embedding strip 3.

Scheme 4: at least one any surface of the shell 11 and/or the cover 12 is provided with the at least one weak area forming embedding strip 3.

It can be understood that, in this embodiment, when the pressure relief conditions are met, the pressure relief weak area 15 and the weak area forming embedding strip 3 open along the length direction of the weak area forming embedding strip 3 to ensure that the pressure relief structure, for example, applied in the terminal battery, can relieve pressure in a timely manner.

It can be understood that, in this embodiment, the structure strength of the pressure relief weak area 15 of the container body 1 is weaker compared to other positions of the container body 1 where no pressure relief weak area 15 is set, and thus the pressure relief weak area 15 can rupture first when the burst pressure is reached, thereby releasing the internal pressure of the container body 1.

In an embodiment, the number of the pressure relief weak area 15 is in a range of 1 to N, and can be determined according to the actual pressure relief requirements. For example, when there are two pressure relief weak areas 15, one pressure relief weak area 15 can be set on the inner wall of the container body 1, and the other pressure relief weak area 15 can be set on the outer wall of the container body 1. Of course, the pressure relief weak areas 15 can also all be set on the outer wall of the container body 1, or all on the inner wall of the container body 1.

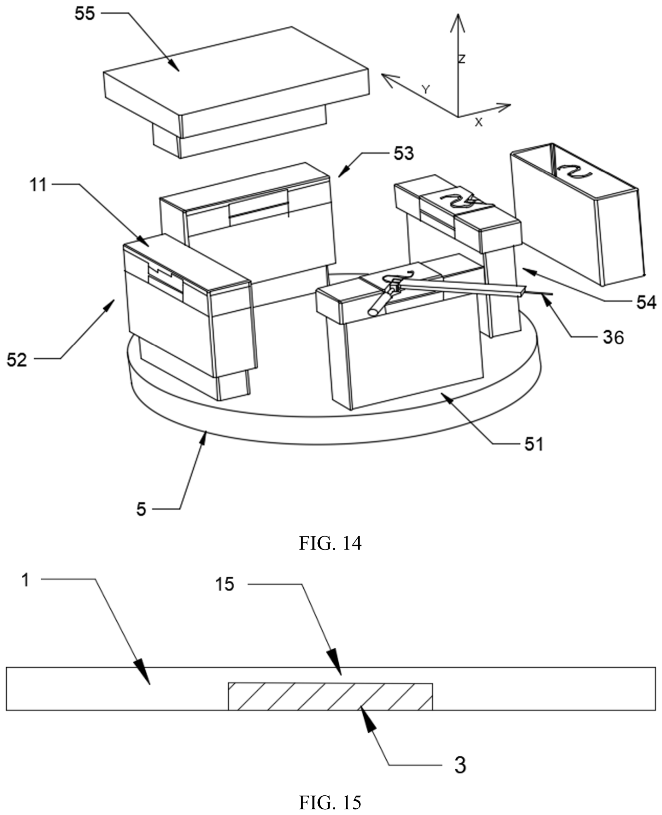

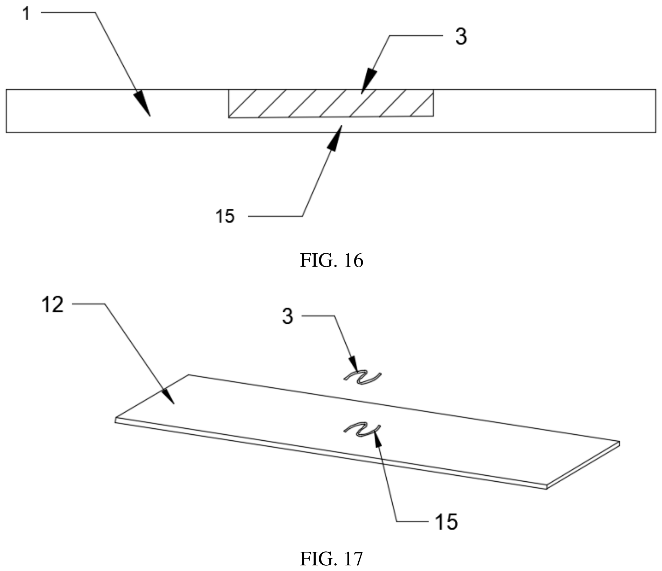

Specifically, taking one pressure relief weak area 15 as an example, as shown in FIG. 15, the pressure relief weak area 15 is disposed on the inner wall of the container body 1 (i.e., a wall of the shell 11 or the cover 12 inside the container body 1). As shown in FIG. 16, the pressure relief weak area 15 is disposed on the outer wall of the container body (i.e., a wall of the shell 11 or the cover 12 outside the container body 1).

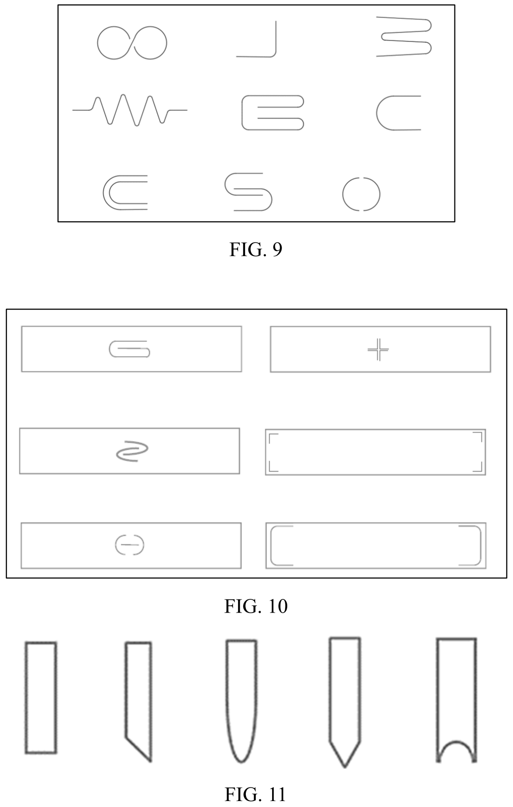

As shown in FIG. 9, the shapes in the first row are sequentially "approximate 8, L, M", the shapes in the second row are sequentially "wave, approximate concave character, U", and the shapes in the third row are sequentially "parallel U, at least partially intersecting U, dotted ring". As shown in FIG. 10, the shapes in the first row are sequentially "paper clip, cross", the shapes in the second row are sequentially "at least partially intersecting arcs, discontinuous right-angle frame", and the shapes in the third row are sequentially "dotted ring, discontinuous rounded frame". The shape of the pressure relief weak area 15 can refer to FIG. 9 or FIG. 10, and the shape of the pressure relief weak area 15 can be any one or a combination of multiple shapes shown or not shown in FIG. 9 and/or FIG. 10. This embodiment does not exhaustively list the remaining shapes.

In an embodiment, the weak area forming embedding strip 3 is at least one of a straight embedding strip and a curved embedding strip, depending on the specific requirements. The shape of the weak area forming embedding strip 3 can refer to FIG. 9 and/or FIG. 10. The weak area forming embedding strip 3 is a strip-shaped, sheet-like structure rather than a complete ring structure, such that the pressure relief weak area 15 may more precisely control the pressure relief area to perform pressure relief.

Specifically, a material of the container body 1 is 3003-H14 (a type of aluminum alloy sheet), with a hardness in a range of 40 to 45 hardness Brinell (HB) and a thickness of 1.5 millimeters (mm). The material of the weak area forming embedding strip 3 is stainless steel 304, with a hardness in a range of 123 to 200 HB. The expansion amount of the weak area forming embedding strip 3 is in a range of 0.08 to 0.09 mm, and the width of the weak area forming embedding strip 3 is in a range of 1.10 to 1.15 mm. The embedding depth of the weak area forming embedding strip 3 is in a range of 1.10 to 1.16 mm, and the thickness of the pressure relief weak area 15 after the weak area forming embedding strip 3 is embedded is in a range of 0.06 to 0.28 mm.

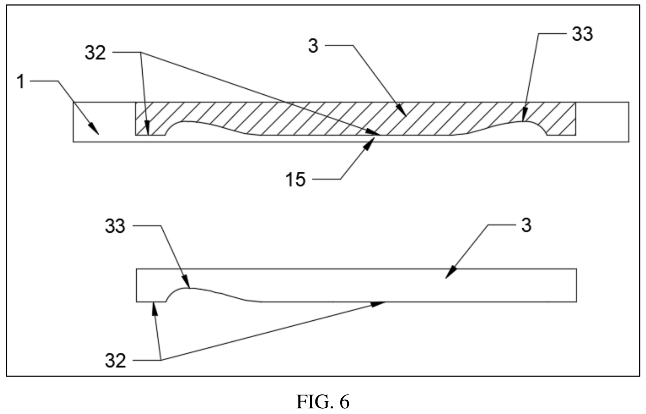

In an embodiment, as shown in FIGS. 6-8, the weak area forming embedding strip 3 is one of an equal-thickness weak area forming embedding strip, a locally reduced-thickness weak area forming embedding strip, and a serrated weak area forming embedding strip to thereby make the pressure relief weak area 15 be one of an equal-thickness pressure relief portion, a locally increased-thickness pressure relief portion, and a dot-break pressure relief portion.

It can be understood that, in the embodiment, by designing the weak area forming embedding strip 3 as one of the equal-thickness weak area forming embedding strip, the locally reduced-thickness weak area forming embedding strip, and the serrated weak area forming embedding strip, the pressure relief weak area 15 forms a corresponding residual thickness gradient change, balancing strength and pressure relief functionality.

Furthermore, the equal-thickness weak area forming embedding strip is suitable for situations that require stable strength and uniform stress distribution, and can ensure the uniform force application on the weak area forming embedding strip 3, preventing destruction caused by local stress concentration. The locally reduced-thickness weak area forming embedding strip, with reduced thickness in certain parts, can provide additional pressure relief capacity in specific regions while maintaining the overall structural strength. The serrated weak area forming embedding strip can guide stress to disperse along the direction of the serrations, thereby enhancing the fatigue resistance and pressure relief capability of the weak area forming embedding strip 3.

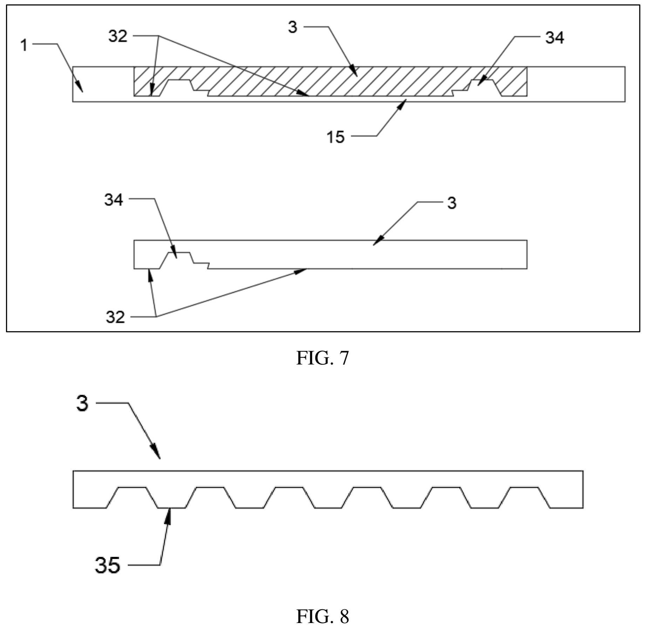

In an embodiment, as shown in FIG. 6, at least one end part and a middle part of a surface of the weak area forming embedding strip 3 facing towards the pressure relief weak area 15 each has a residual thickness reduction portion 32. The residual thickness reduction portion 32 of the middle part is connected to the residual thickness reduction portion 32 of the at least one end part through a gradient change surface 33 to make the pressure relief weak area 15 be the locally increased-thickness pressure relief portion in a gradient change type; or, as shown in FIG. 7, the residual thickness reduction portion 32 of the middle part extends towards the residual thickness reduction portion 32 of the at least one end part and is connected to the residual thickness reduction portion 32 of the at least one end part through an increased-thickness notch 34 to make the pressure relief weak area 15 be the locally increased-thickness pressure relief portion.

Specifically, the gradient change surface 33 can be an arc-shaped surface or an inclined surface, allowing for the gradual release of pressure and thus preventing damage caused by stress concentration.

It can be understood that, in the embodiment, the at least one end part and the middle part of a lower surface of the weak area forming embedding strip 3 respectively have residual thickness reduction portions 32, adjacent two of the residual thickness reduction portions 32 are connected through the gradient change surface 33 or the increased-thickness notch 34. During pressure relief, the internal pressure of the container body 1 can be gradually released along the length direction of the weak area forming embedding strip 3, precisely controlling the pressure relief area and thereby preventing damage caused by sudden pressure changes. Meanwhile, the locally increased-thickness pressure relief portion corresponding to the gradient change surface 33 maintains higher structural strength during the pressure release process, effectively releasing internal pressure without damaging the overall structure of the container. The thickening notch 34 increases the local residual thickness of the pressure relief weak area 15, which can prevent the tear from extending during pressure relief.

In an embodiment, as shown in FIG. 8, a surface of the weak area forming embedding strip 3 facing towards the pressure relief weak area 15 has multiple serrated portions 35 penetrating through a thickness direction of the pressure relief weak area 15 to make the pressure relief weak area 15 be the dot-break pressure relief portion.

It can be understood that in this embodiment, multiple serrated portions 35 on the lower surface of the weak area forming embedding strip 3 penetrate at least partially through the pressure relief weak area 15 in the thickness direction, to make the pressure relief weak area 15 be the dot-break pressure relief portion. This design allows for a more uniform and controllable release of pressure, avoiding the issue of local stress concentration that might arise from a single pressure relief point.

In this embodiment, the at least one of the cover 12 and the at least one part of the shell 11 defines an embedding groove 31 formed by embedding the weak area forming embedding strip 3, an end of a cross-section of the weak area forming embedding strip 3 facing towards a groove bottom of the embedding groove 31 is one or more of an inclined surface, a flat surface, a concave circular arc surface, and a convex circular arc surface.

Specifically, as shown in FIG. 11, the cross-sectional shape of the first weak area forming embedding strip 3 in the first row is a flat surface. The cross-sectional shape of the end of the second weak area forming embedding strip 3 in the first row that extends into the embedding groove 31 is an inclined surface or a flat surface. The cross-sectional shape of the end of the third weak area forming embedding strip 3 in the first row that extends into the embedding groove 31 is a convex circular arc surface. The cross-sectional shape of the end of the fourth weak area forming embedding strip 3 in the first row that extends into the embedding groove 31 consists of two inclined surfaces distributed at an angle. The cross-sectional shape of the end of the fifth weak area forming embedding strip 3 in the first row that extends into the groove 31 is a concave circular arc surface. The cross-sectional shape of the weak area forming embedding strip 3 can be any one shown or not shown in FIG. 11. Designs other than a flat surface can change the thickness of the weak pressure relief portion 151, thereby allowing more precise control of the pressure relief area during pressure relief.

An embodiment 2 provides a manufacturing process of the pressure relief structure in the embodiment 1, including the following steps S1-S3.

S1, it is set that the thickness of the at least one part of the shell 11 is greater than the embedding depth of the at least one weak area forming embedding strip 3 embedded in the at least one part of the shell 11, and/or it is set that the thickness of the cover 12 is greater than the embedding depth of the at least one weak area forming embedding strip 3 embedded in the cover 12.

S2, two manufacturing schemes are as follows.

Scheme 1, the at least one weak area forming embedding strip 3 is embedded into the at least one of the cover 12 and the at least one part of the shell 11 by pressing to form the pressure relief weak area 15 in the at least one of the cover 12 and the at least one part of the shell 11.

Scheme 2, the pressure relief weak area 15 is disposed on the container body 1. The pressure relief weak area 15 includes the weak area forming embedding strip 3 and an embedding groove 31 formed by the embedding of the weak area forming embedding strip 3. The bottom of the embedding groove 31 and the inner or outer wall of the container body 1 form the residual thickness pressure relief portion 151. A reinforcement member 2 is fixed on the container body 1 and located on the inner or outer surface of the pressure relief weak area 15 (for example, the reinforcement member 2 is provided on the inner or outer wall of the container body 1). A pressure relief through area 21 is provided on the reinforcement member 2, so that the reinforcement member 2 strengthens the residual thickness pressure relief portion 151 in both pressure relief and non-pressure relief states, and at least one part of the residual thickness pressure relief section 151 opens along the pressure relief through area 21 in the pressure relief state.

S3, the shell 11 and the cover 12 in step S2 are connected and sealed to form the container body 1, where the pressure relief weak area 15 and the weak area forming embedding strip 3 open along the length direction of the weak area forming embedding strip 3 when the container body 1 is in the pressure relief state.

Specifically, the reinforcement member 2 is in a block shape or a sheet shape.

It can be understood that in this embodiment, in step S1, the thickness of the at least one part of the shell 11 and/or the thickness of the cover 12 is set to be greater than the embedding depth of the weak area forming embedding strip 3 embedded in the cover 12. In step S2, when using the pressing technology to embed the weak area forming embedding strip 3 into any at least one wall thickness of the container body 1 according to scheme 1, the wall thickness is locally thinned to form the pressure relief weak area 15. Subsequently, in step S3, when the internal pressure of the container body 1 is too high, the pressure relief weak area 15 and the weak area forming embedding strip 3 can rupture preferentially to release the internal pressure, thereby protecting the container body from damage.

It can be understood that when step S2 adopts scheme 2, the weak area forming embedding strip 3 is pressed into the inner surface and/or outer surface of the container body 1. Of course, the inner surface or outer surface can also be referred to as the inner wall and the outer wall. The reinforcement member 2, which is always fixed to the container body 1, provides structural reinforcement to the weak pressure relief portion 151 both during pressure relief and non-pressure relief, continuously offering structural reinforcement protection to the pressure relief weak area 15. At the same time, the reinforcement member 2 allows at least one part of the pressure relief weak area 15 to open along the pressure relief through area of the reinforcement member 2 during pressure relief, and to perform a pre-set trajectory path of tearing, avoiding excessive tearing and other phenomena, protecting the overall structure of the container and achieving effective pressure release to meet the strength requirements of various scenarios, thereby ensuring the safety in production and use.

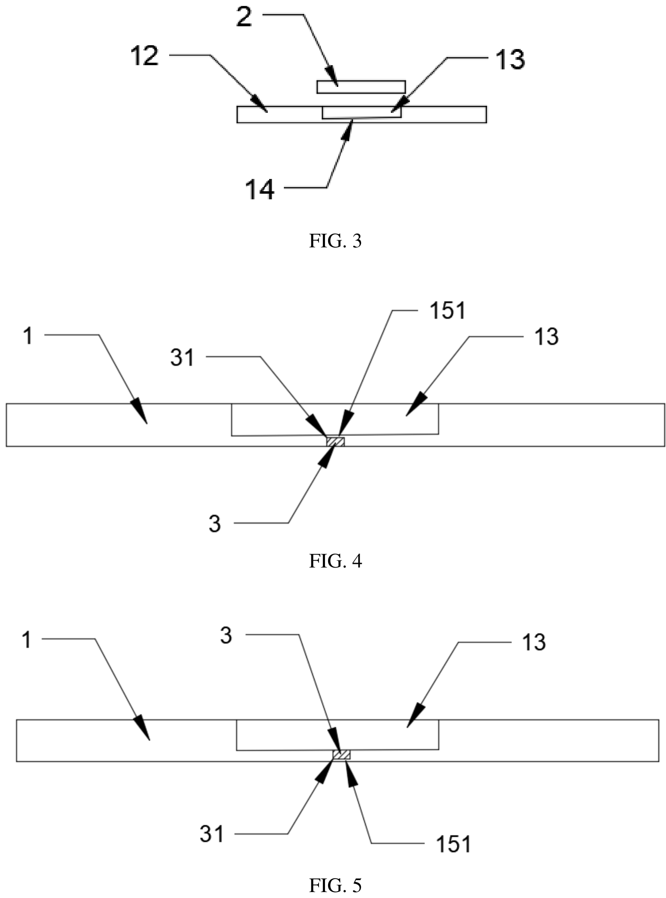

Specifically, when step S2 adopts scheme 2, at this time, the number of the pressure relief weak areas 15 can be 1 to N, and the number can be determined according to the actual pressure relief requirements. As shown in FIG. 4, taking one pressure relief weak area 15 as an example, the pressure relief weak area 15 is disposed on the inner wall of the container body 1 (i.e., a wall of the shell 11 or the cover 12 inside the container body 1).). As shown in FIG. 5, the pressure relief weak area 15 is disposed on the outer wall of the container body 1 (i.e., a wall of the shell 11 or the cover 12 outside the container body 1).

In an embodiment, the pressure relief through area 21 and the pressure relief weak area 15 are arranged in a similar shape.

It can be understood that in this embodiment, the pressure relief through area 21 is contoured to match the pressure relief weak area 15 to ensure that during pressure relief, the internal gas can be directly released from the pressure relief weak area 15 through the pressure relief through area 21. This optimizes the pressure release path and enhances the explosion-proof effect.

It can be understood that in this embodiment, the shape of the pressure relief through area 21 can be any one or more of shapes shown or not shown in FIG. 9. The pressure relief weak area 15 is then contoured to match the above-mentioned shape, allowing the pressure relief weak area 15 to open along the pressure relief through area 21. This embodiment does not exhaustively list the remaining shapes.

In an embodiment, as shown in FIGS. 2-3, the outer wall of the container body 1 is provided with a recess 13, which can also be understood as a recessed step. The recess 13 is formed by stamping or laser etching and can have a shape such as rectangular, circular, or oval, etc. The reinforcement member 2 is fixed in the recess 13. A weak portion 14 is formed between the bottom of the recess 13 and the inner wall of the container body 1, and the pressure relief weak area 15 is located on the weak portion 14. The design of the recess 13 serves not only to secure the reinforcement member 2 but also to further reduce the thickness of the pressure relief weak area 15, thereby meeting the pressure relief requirements.

Specifically, the volume of the recess 13 is less than the volume of the reinforcement member 2. When the reinforcement member 2 is pressed into the recess 13, the inner surface of the recess 13 is deformed by the expansion caused by the squeezing of the reinforcement member 2. This results in the formation of a weak portion 14 between the bottom of the recess 13 and the inner wall of the container body 1. At the same time, the reinforcement member 2 is fixed by the squeezing between the reinforcement member 2 and the recess 13.

It can be understood that in this embodiment, by fixing the reinforcement member 2 in the recess 13, the weak portion 14 is formed for setting the pressure relief weak area 15, and at the same time, structural reinforcement is provided for the pressure relief weak area 15.

Furthermore, the reinforcement member 2 is pressed into the recess 13, and the fixation of the reinforcement member 2 is achieved through the mutual squeezing action between the inner surface of the recess 13 and the reinforcement member 2, without any additional reinforcement steps, simplifying the installation procedure and reducing production costs. After the reinforcement member 2 is embedded into the recess 13, the entire assembly undergoes surface corrosion-resistant treatment.

Additionally, the thickness of the reinforcement member 2 is equal to the depth of the recess 13, so that the reinforcement member 2 is flush with the outer surface of the container body 1 to eliminate potential differences. Of course, if there is a potential difference, it can also be eliminated by setting a protective layer.

In an embodiment, as shown in FIG. 14, step S2 includes the following steps S20-S23.

S20, a weak area forming embedding strip-forming assembly 4 is disposed on a weak area forming embedding strip loading station 5, and a weak area forming embedding strip to be formed 36 is fed into the weak area forming embedding strip-forming assembly 4 to obtain the weak area forming embedding strip 3 in a set shape.

S21, the weak area forming embedding strip-forming assembly 4 in step S20 is moved to a shell loading station 52; and the shell 11 is fitted on the weak area forming embedding strip-forming assembly 4, or the cover 12 is fixed on the weak area forming embedding strip-forming assembly 4.

S22, the weak area forming embedding strip-forming assembly 4 in step S21 is moved to a pressing station 53, and a pressing upper die 55 disposed on the pressing station 53 is moved downward to contact the shell 11 or the cover 12 to thereby force the at least one weak area forming embedding strip 3 to be pressed into the cover 12 or the at least one part of the shell 11.

S23, the weak area forming embedding strip-forming assembly 4 is moved to an unloading station 54, and the shell 11 or the cover 12 is removed.

It can be understood that in this embodiment, step S20 achieves precise forming of the weak area forming embedding strip 3 through the weak area forming embedding strip-forming assembly 4 to ensure the consistency of the final product. Step S21 precisely controls the position of the weak area forming embedding strip-forming assembly 4 to achieve the correct installation of the shell 11 or the cover 12 of the container body 1. Step S22 moves the weak area forming embedding strip-forming assembly 4 to the pressing station 53 for precise alignment to ensure that the weak area forming embedding strip 3 can be correctly pressed into the designated position. The pressing upper die 55 applies pressure by moving downward to press the weak area forming embedding strip 3 into the shell 11 or the cover 12, achieving precise assembly. In step S23, the weak area forming embedding strip-forming assembly 4 is moved to the unloading station 54 to effectively remove the shell 11 or the cover 12, and then the cover 12 is used to close the shell 11 to form the complete container body 1.

In an embodiment, in step S2, the embedding device used for pressing includes a rotary table 5, and the weak area forming embedding strip-forming assembly 4 from step S20 is disposed on the rotary table 5.

In an embodiment, there are multiple sets of the weak area forming embedding strip-forming assembly 4, and the rotary table 5 rotates to cause the weak area forming embedding strip-forming assembly 4 to sequentially pass through the weak area forming embedding strip loading station 51, the shell loading station 52, the pressing station 53, and the unloading station 54 in a first rotational direction. The embedding device further includes a pressing upper die 55 located above the pressing station 53.

In an embodiment, the rotary table 5 is connected to a rotary drive assembly.

Specifically, the rotary drive assembly can be a stepping motor or a direct drive (DD) motor.

It can be understood that in this embodiment, the embedding device controls the rotation of the rotary table 5 through the rotary drive assembly. The weak area forming embedding strip-forming assembly 4 successively passes through different stations to complete the embedding process of the weak area forming embedding strip 3 while forming a scribe mark, i.e., the pressure relief weak area 15. Through the coordinated operation of the rotary table 5, the weak area forming embedding strip-forming assembly 4, the rotary drive assembly, the pressing upper die 55, and respective stations, the efficient embedding and automated processing of the weak area forming embedding strip 3 are achieved.

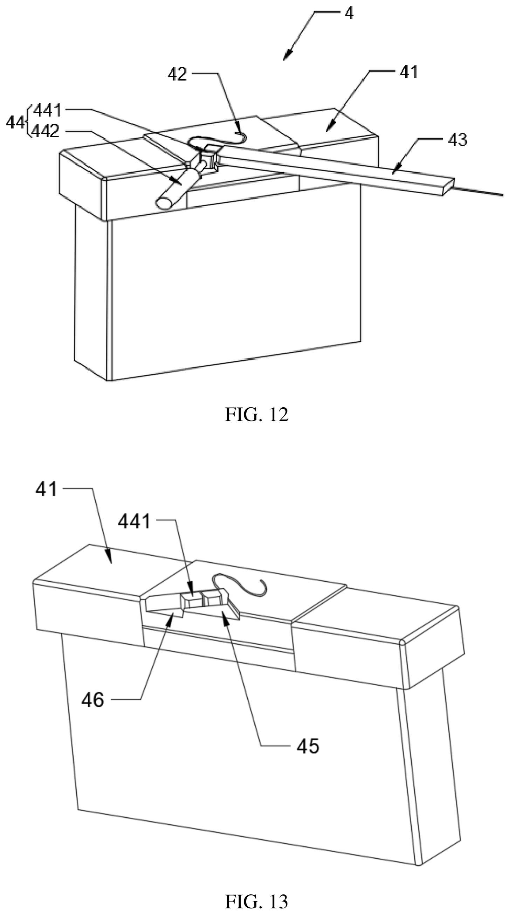

In an embodiment, as shown in FIG. 12, the weak area forming embedding strip-forming assembly 4 in step S20 includes a forming mold 41, and the forming mold 41 is provided with an embedding strip bending forming groove 42 thereon. An end of the embedding strip bending forming groove 42 in the length direction is closed, while another end of the embedding strip bending forming groove 42 extends to the side of the forming mold 41 and communicates with the outside. Communication with the outside can be used to implement the continuous supply of raw materials for the weak area forming embedding strip 3 and intermittent forming operations (for example, cutting to a set length). The material of the raw material for the weak area forming embedding strip 3 is preferably 304 stainless steel, with a hardness of 123 to 200 HB, an expansion amount of 0.08 to 0.09 mm, and a width preferably of 1.10 to 1.15 mm.

Specifically, the embedding strip bending forming groove 42 can be set according to the actual situation and can be any shape such as "S", "U", "H", "cross", etc. This embodiment does not limit this.

It can be understood that in this embodiment, the embedding strip bending forming groove 42 can ensure that the weak area forming embedding strip 3 extends along the intended path and maintains the correct shape without deformation during the forming process. Meanwhile, the closed end of the embedding strip bending forming groove 42 ensures that the weak area forming embedding strip 3 does not slide or shift during forming, which helps to control the movement distance of the weak area forming embedding strip 3 and achieve accurate positioning and precise forming. The other end of the embedding strip bending forming groove 42 communicates with the side of the forming mold 41 and the outside, which facilitates the entry of the weak area forming embedding strip 3 from the outside into the forming groove and subsequent processing operations, thereby improving production efficiency.

In an embodiment, the weak area forming embedding strip-forming assembly 4 further includes an embedding strip feeding guide 43 for continuously feeding the weak area forming embedding strip 3, with the output end of the embedding strip feeding guide 43 being in communication with the other end of the embedding strip bending forming groove 42.

Specifically, as shown in FIG. 13, a first support position 45 for supporting the embedding strip feeding guide 43 is provided on the forming mold 41. The first support position 45 can be understood as a stepped position to ensure that the height of the embedding strip feeding guide 43 remains consistent after this position, ensuring the stable feeding of the raw material of the weak area forming embedding strip 3.

It can be understood that in this embodiment, the embedding strip feeding guide 43 is used to feed the weak area forming embedding strip 3 into the embedding strip bending forming groove 42. By using the embedding strip feeding guide 43 instead of manual labor, the automation level is increased, downtime is reduced, production efficiency is improved, and the consistency of product quality is ensured.

In an embodiment, as shown in FIGS. 12 and 14, the embedding strip feeding guide 43 performs an alternating motion in the form of a swinging or linear movement between a feeding position and an avoidance position in a plane perpendicular to the vertical axis (Z-axis). Taking the linear movement as an example, there is a linear displacement between the feeding position and the avoidance position of the embedding strip feeding guide 43, which can be driven by a mechanical drive, such as using a drive cylinder, a hydraulic cylinder, or a linear motor, etc.

By setting up in the above manner, it can prevent the embedding strip feeding guide 43 from causing position interference problems with the forming mold 41 during movement.

When the embedding strip feeding guide 43 is continuously feeding, since the length of the embedding strip bending forming groove 42 is set according to the length of the weak area forming embedding strip 3, an embedding strip cutting mechanism 44 is provided at the connection between the embedding strip bending forming groove 42 and the embedding strip feeding guide 43.

It can be understood that in this embodiment, when the embedding strip feeding guide 43 located at the loading position feeds the weak area forming embedding strip 3 into the embedding strip bending forming groove 42, and an end of the weak area forming embedding strip 3 abuts against the closed end of the embedding strip bending forming groove 42, the embedding strip cutting mechanism 44 cuts the weak area forming embedding strip 3 at the other end of the embedding strip bending forming groove 42. At the same time, the embedding strip feeding guide 43 moves from the loading position to the avoidance position through a swinging or linear motion, allowing the forming mold 41 to move to the next station for subsequent operations.

In an embodiment, the embedding strip cutting mechanism 44 includes a shearing blade group 441 (which is commercially available), and a driver 442 for driving the shearing blade group 441 to perform the shearing motion. The shearing blade group 441 is double-edged, and the shearing blade group 441 is fixed on the forming mold 41 and located between the other end of the embedding strip bending forming groove 42 and the output end of the embedding strip input guide 43.

Specifically, the driver 442 can be any one of a pneumatic cylinder, a hydraulic cylinder, and a linear motor.

Specifically, a blade group fixing position 46 for supporting the shearing blade group 441 is provided on the forming mold 41. The blade group fixing position 46 can be understood as a stepped position to ensure the stable fixing of the shearing blade group 441.

It can be understood that in this embodiment, the embedding strip cutting mechanism 44, which is responsible for the cutting operation, consists of two opposing blades and can efficiently cut the material of the weak area forming embedding strip 3. The driver 442 provides power to the shearing blade group 441, enabling the embedding strip cutting mechanism 44 to perform precise cutting actions. Meanwhile, the double-edged shearing blade group 441, with two relatively parallel cutting edges, can shear the weak area forming embedding strip 3 from two directions simultaneously, thereby improving cutting efficiency and accuracy.

By repeating the above actions, the weak area forming embedding strip 3 can be intermittently and continuously formed in different forming molds 41.

In an embodiment, the embedding strip feeding guide 43 in the feeding position and the driver 442 are distributed at an angle. For example, at a right angle. That is, the linear movement of the embedding strip feeding guide 43 at this time will not collide with the driver 442, ensuring their safe use.

It can be understood that in this embodiment, the embedding strip feeding guide 43 and the driver 442 are arranged at an angle. This arrangement facilitates the driver 442 in driving the shearing blade group 441 to cut the embedding strip 3, and simultaneously prevents any interference between the embedding strip feeding guide 43 and the driver 442 when the embedding strip feeding guide 43 moves between the loading position and the avoidance position. This ensures that the processing of the embedding strip-forming assembly 4 proceeds in an orderly manner, thereby enhancing production efficiency.

An embodiment 3 provides an explosion-proof method based on the pressure relief structure in the embodiment 1. The explosion-proof method includes the following steps.

A safe gas pressure value and a burst gas pressure value inside the container body 1 is set.

The pressure relief weak area 15 and the weak area forming embedding strip 3 open along the length direction of the weak area forming embedding strip 3 when a gas pressure inside the container body 1 reaches the burst gas pressure value to thereby perform a pressure relief action. The safe gas pressure value is less than the burst gas pressure value. Taking a new energy power battery as an example, the burst gas pressure value is in a range of 0.7 MPa to 2.3 MPa.

It can be understood that in this embodiment, when the internal gas pressure of the pressure relief structure reaches or exceeds the burst pressure value, the pressure relief weak area 15 and the weak area forming embedding strip 3 on the container body 1 open along the length direction of the weak area forming embedding strip 3, releasing the internal pressure to avoid safety risks.

Finally, it should be noted that the above embodiments are only used to illustrate the technical solution of the invention and not to limit it. Although the invention has been described in detail with reference to the above embodiments, those skilled in the art should understand that modifications or equivalent substitutions can still be made to the specific embodiments of the invention, and any modifications or equivalent substitutions that do not depart from the spirit and scope of the invention should be covered within the scope of protection of the claims of the invention.

## Claims

1. A pressure relief structure, comprising:
a container body (1), at least comprising: a shell (11), and a cover (12);
wherein at least one weak area forming embedding strip (3) is embedded in at least one of the cover (12) and at least one part of the shell (11) to thereby allow the at least one of the cover (12) and the at least one part of the shell (11) to have a pressure relief weak area (15); a thickness of the cover (12) is greater than an embedding depth of the at least one weak area forming embedding strip (3) embedded in the cover (12), and/or a thickness of the at least one part of the shell (11) is greater than an embedding depth of the at least one weak area forming embedding strip (3) embedded in the at least one part of the shell (11); and the pressure relief weak area (15) and the at least one weak area forming embedding strip (3) are configured to open along a length direction of the at least one weak area forming embedding strip (3) when in a pressure relief state.

2. The pressure relief structure as claimed in claim 1, wherein the at least one weak area forming embedding strip (3) is embedded in an inner surface or an outer surface of the at least one part of the shell (11).

3. The pressure relief structure as claimed in claim 1, wherein the at least one weak area forming embedding strip (3) is embedded in any surface of the cover (12) in a thickness direction of the cover (12).

4. The pressure relief structure as claimed in any one of claims 1-3, wherein the at least one weak area forming embedding strip (3) is a strip-shaped metal embedding strip, the at least one weak area forming embedding strip (3) is embedded in the at least one part of the shell (11), and the at least one weak area forming embedding strip (3) is embedded in the cover (12).

5. The pressure relief structure as claimed in any one of claims 1-3, wherein the at least one weak area forming embedding strip (3) is at least one of a straight embedding strip and a curved embedding strip.

6. The pressure relief structure as claimed in claim 1, wherein the at least one weak area forming embedding strip (3) is one of an equal-thickness weak area forming embedding strip, a locally reduced-thickness weak area forming embedding strip, and a serrated weak area forming embedding strip to thereby make the pressure relief weak area (15) be one of an equal-thickness pressure relief portion, a locally increased-thickness pressure relief portion, and a dot-break pressure relief portion.

7. The pressure relief structure as claimed in claim 6, wherein at least one end part and a middle part of a surface of the at least one weak area forming embedding strip (3) close to the pressure relief weak area (15) each has a residual thickness reduction portion (32);
wherein the residual thickness reduction portion (32) of the middle part is connected to the residual thickness reduction portion (32) of the at least one end part through a gradient change surface (33) to make the pressure relief weak area (15) be the locally increased-thickness pressure relief portion in a gradient change type; or the residual thickness reduction portion (32) of the middle part extends towards the residual thickness reduction portion (32) of the at least one end part and is connected to the residual thickness reduction portion (32) of the at least one end part through an increased-thickness notch (34) to make the pressure relief weak area (15) be the locally increased-thickness pressure relief portion.

8. The pressure relief structure as claimed in claim 6, wherein a surface of the at least one weak area forming embedding strip (3) close to the pressure relief weak area (15) has a plurality of serrated portions (35) penetrating through a thickness direction of the pressure relief weak area (15) to make the pressure relief weak area (15) be the dot-break pressure relief portion.

9. The pressure relief structure as claimed in claim 1, wherein the at least one of the cover (12) and the at least one part of the shell (11) defines an embedding groove (31) formed by embedding the at least one weak area forming embedding strip (3), an end of a cross-section of the at least one weak area forming embedding strip (3) close to a bottom of the embedding groove (31) is one or more of an inclined surface, a flat surface, a concave circular arc surface, and a convex circular arc surface.

10. A manufacturing process of the pressure relief structure as claimed in any one of claims 1-9, comprising the following steps:
S1, setting that the thickness of the at least one part of the shell (11) is greater than the embedding depth of the at least one weak area forming embedding strip (3) in the at least one part of the shell (11), and/or setting that the thickness of the cover (12) is greater than the embedding depth of the at least one weak area forming embedding strip (3) in the cover (12);
S2, embedding the at least one weak area forming embedding strip (3) into the at least one of the cover (12) and the at least one part of the shell (11) by pressing to form the pressure relief weak area (15) in the at least one of the cover (12) and the at least one part of the shell (11); and
S3, connecting and sealing the shell (11) and the cover (12) in step S2 to form the container body (1), wherein the pressure relief weak area (15) and the at least one weak area forming embedding strip (3) open along the length direction of the at least one weak area forming embedding strip (3) when the container body (1) is in the pressure relief state.

11. The manufacturing process of the pressure relief structure as claimed in claim 10, wherein step S2 comprises the following steps:
S20, placing a weak area forming embedding strip-forming assembly (4) on a weak area forming embedding strip loading station (5), and feeding a weak area forming embedding strip to be formed (36) into the weak area forming embedding strip-forming assembly (4) to obtain the at least one weak area forming embedding strip (3) in a set shape;
S21, moving the weak area forming embedding strip-forming assembly (4) in step S20 to a shell loading station (52); and fitting the shell (11) on the weak area forming embedding strip-forming assembly (4), or fixing the cover (12) on the weak area forming embedding strip-forming assembly (4);
S22, moving the weak area forming embedding strip-forming assembly (4) in step S21 to a pressing station (53), and moving a pressing upper die (55) disposed on the pressing station (53) downward to contact the shell (11) or the cover (12) to thereby force the at least one weak area forming embedding strip (3) to be embedded into the cover (12) or the at least one part of the shell (11); and
S23, moving the weak area forming embedding strip-forming assembly (4) in step S22 to an unloading station (54), and removing the shell (11) or the cover (12).

12. An explosion-proof method based on the pressure relief structure as claimed in any one of claims 1-9, comprising:
setting a safe gas pressure value and a burst gas pressure value inside the container body (1); and
opening the pressure relief weak area (15) and the at least one weak area forming embedding strip (3) along the length direction of the at least one weak area forming embedding strip (3) when a gas pressure inside the container body (1) reaches the burst gas pressure value to thereby perform a pressure relief action.
